# EUROPÄISCHE PATENTANMELDUNG

(11) **EP 2 777 960 A1**
(43) Veröffentlichungstag der Anmeldung: **17.09.2014**
(21) Anmeldenummer: 13159626.4
(22) Anmeldetag: 15.03.2013
(51) Int. Cl.: B60D 1/07, B60D 1/52

(54) **Vorrichtung mit einer Abschleppkupplung zur lösbaren Befestigung an einem Fahrzeug**

(71) Anmelder: Rheinmetall MAN Military Vehicles GmbH, 1230 Wien (AT)
(72) Erfinder: Ribo, Franz, 1220 Wien (AT); Zwerenz, Fritz, 2604 Theresienfeld (AT)
(74) Vertreter: Dietrich, Barbara

(57) **Zusammenfassung**

Die Erfindung betrifft eine Vorrichtung (1) mit einer Abschleppkupplung (7) zur lösbaren Befestigung an einem Fahrzeug (2) mit ersten Abschleppösen (3, 4).

Um eine derartige Vorrichtung (1) auf einfache Weise schnell und ohne aufwendige Hilfsmittel vorder- und/oder heckseitig an dem Fahrzeug (2) zu montieren sowie zu demontieren, schlägt die Erfindung vor, die mit der Abschleppkupplung (7) versehene erfindungsgemäße Vorrichtung (1) in die ersten Abschleppösen (3, 4) des Fahrzeuges (2) einzuhängen.

## Beschreibung

Die Erfindung betrifft eine Vorrichtung mit einer Abschleppkupplung zur lösbaren Befestigung an einem Fahrzeug mit mindestens zwei ersten Abschleppösen. Dieser variable Adapter wird in Ösen am Fahrzeug, die sich zum Zweck des Abschleppens bzw. Bergens dort befinden, ohne Werkzeug eingehängt und kann leicht und problemlos schnell abgenommen werden. Der Adapter ist zudem so aufgebaut, dass er sich durch Verdrehen, Umstecken und Austauschen von Zwischenstücken an verschiedenen Ösen bzw. deren Ausführungen und Abstände variabel anpassen lässt.

Insbesondere bei militärischen Fahrzeugen ist zum Abschleppen oder Bergen eines anderen Fahrzeuges oder durch ein anderes Fahrzeug vorder- und/oder heckseitig eine Abschleppkupplung vorgesehen, die mit der Fahrzeugkarosserie fest bzw. kraftschlüssig verbunden ist. Außerdem besitzen derartige Fahrzeuge in der Regel vorder- und/oder heckseitig zusätzliche Abschleppösen, welche häufig seitlich von der Abschleppkupplung angeordnet sind.

Im Gegensatz zu den Abschleppösen kann die relativ große Abschleppkupplung unter anderem bei der Fahrt im Gelände die Bewegung etwa eines militärischen Fahrzeuges stark behindern. Es ist daher bereits vorgeschlagen worden, die Abschleppkupplung lösbar an dem Fahrzeug zu befestigen, so dass nur im Falle einer Bergung etc. die Abschleppkupplung an dem Fahrzeug angeordnet werden muss.

Aus der DE 10 2007 024 707 B3 ist eine Bergevorrichtung mit einer Abschleppkupplung bekannt, die speziell zur Anordnung an der Heckklappe eines gepanzerten Fahrzeuges anordbar ist. Dabei umfasst die bekannte Vorrichtung ein Grundgestell, an dem die Abschleppkupplung kraftschlüssig befestigt ist. Mit Hilfe eines unteren Trägers ist das Grundgestell an dem bodenseitigen Bereich der Karosserie des Panzers entlang der Drehachse der Heckklappe und mit Hilfe eines durch die Heckklappe hindurchragenden oberen Trägers mit dem Rahmen der Heckklappenöffnung verbindbar. Die Verwendung macht dabei entsprechende bauliche Anpassungen der Fahrzeuge erforderlich.

Der Erfindung liegt die Aufgabe zugrunde, eine Vorrichtung der eingangs erwähnten Art anzugeben, die auf einfache Weise schnell und ohne aufwendige Hilfsmittel vorder- und/oder heckseitig an einem Fahrzeug mit ersten Abschleppösen, insbesondere einem militärischen, auch gepanzerten Fahrzeug, montiert sowie demontiert werden kann.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, bei Bedarf die mit der Abschleppkupplung versehene erfindungsgemäße Vorrichtung in die vorhandenen ersten Abschleppösen des Fahrzeuges einzuhängen. Sofern die Vorrichtung nicht mehr benötigt wird, lässt sie sich leicht und schnell wieder abnehmen.

Eine derartige Vorrichtung wird dadurch realisiert, dass sie einen im Wesentlichen plattenförmigen Grundträger umfasst, auf dessen Außenseite die Abschleppkupplung angeordnet ist. An dem Grundträger sind mindestens zwei erste Befestigungseinrichtungen angeordnet, die in Bezug auf die Abschleppkupplung auf gegenüberliegenden Seitenflächen des Grundträgers kraftschlüssig befestigt sind und die jeweils ein sich über die Innenseite des Grundträgers erstreckendes erstes Befestigungselement umfassen. Dabei sind die ersten Befestigungselemente derart ausgebildet, dass sie direkt oder über Zwischenstücke lösbar mit den ersten Abschleppösen des Kraftfahrzeuges kraft- und/oder formschlüssig verbindbar sind.

Vorzugsweise ist die erfindungsgemäße Vorrichtung derart aufgebaut, dass sie sich durch Verdrehen, Umstecken und Austauschen von Zwischenstücken an unterschiedliche erste Abschleppösen sowie an Abschleppösen mit unterschiedlichen Abständen variabel anpassen lässt.

Um nach der Befestigung der erfindungsgemäßen Vorrichtung an den ersten Abschleppösen des Fahrzeuges auch weiterhin Abschleppösen zur Verfügung zu haben, hat es sich als vorteilhaft erwiesen, wenn mindestens eine der ersten Befestigungseinrichtungen eine mit dem Grundträger kraftschlüssig verbundene erste Flanschplatte umfasst, die auf ihrer ersten Seite mit dem ersten Befestigungselement und auf ihrer gegenüberliegenden zweiten Seite mit einer über die Außenseite des Grundträgers ragenden zweiten Abschleppöse kraftschlüssig verbunden ist.

Bei einem bevorzugten Ausführungsbeispiel ist vorgesehen, dass die erste Flanschplatte der ersten Befestigungseinrichtung außenseitig an dem Grundträger befestigt ist und dass das erste Befestigungselement sich über eine in dem Grundträger angeordnete Ausnehmung zur Innenseite des Grundträgers erstreckt.

Vorteilhafterweise sind die ersten Befestigungselemente gabelförmig ausgebildet und umgreifen bei der bestimmungsgemäßen Verwendung der Vorrichtung die entsprechende erste Abschleppöse des Kraftfahrzeuges seitlich. Außerdem weisen die beiden Schenkel des gabelförmigen Befestigungselementes jeweils eine radiale Bohrung auf, durch die ein die Schenkel und die erste Abschleppöse verbindender Steck- oder Schraubbolzen hindurchführbar ist.

Bei der Verwendung eines Steck- oder Schraubbolzens mit Bolzenkopf sollte dieser auf seinem dem Bolzenkopf abgewandten Ende mittels eines Sicherungsstiftes sicherbar sein.

Als besonders vorteilhaft hat es sich erwiesen, wenn die Abschleppkupplung eine mit dem Grundträger kraftschlüssig verbundene zweite Flanschplatte umfasst, die mit einem zweiten Befestigungselement kraftschlüssig verbunden ist, welches über die Innenseite des Grundträgers ragen kann und entweder direkt oder über ein Zwischenstück mit mindestens einem Anlenkpunkt der Fahrzeugkarosserie lösbar verbindbar ist.

Vorgeschlagen wird ein variabler Adapter (eine Vorrichtung) für die Aufnahme einer Abschleppkupplung, vorzugsweise vorne am Fahrzeug, wobei der Adapter in Ösen am Fahrzeug, die sich zum Zweck des Abschleppens und / oder Bergens dort befinden, ohne Werkzeug eingebunden werden kann, zum Beispiel durch Einhängen, Der Adapter ist so aufgebaut, dass es sich durch Verdrehen, Umstecken und Austauschen von Zwischenstücken an verschiedenen Ösen - Ausführungen (konstruktiv unterschiedlich) und Ösen - Abständen variabel anpassen lässt. Derartige Zwischenstücke können sein beispielsweise die ersten Befestigungseinrichtungen mit unterschiedlichen ersten Befestigungselementen, Flanschplatten, etc.

Weitere Einzelheiten und Vorteile der Erfindung ergeben sich aus dem folgenden, anhand von Figuren erläuterten Ausführungsbeispiel. Es zeigen:
- Fig. 1 und 2: zwei perspektivische Ansichten einer an einem Fahrzeug angeordneten erfindungsgemäßen Vorrichtung aus unterschiedlichen Blickrichtungen,
- Fig. 3: eine vergrößerte Darstellung aus Fig. 2.

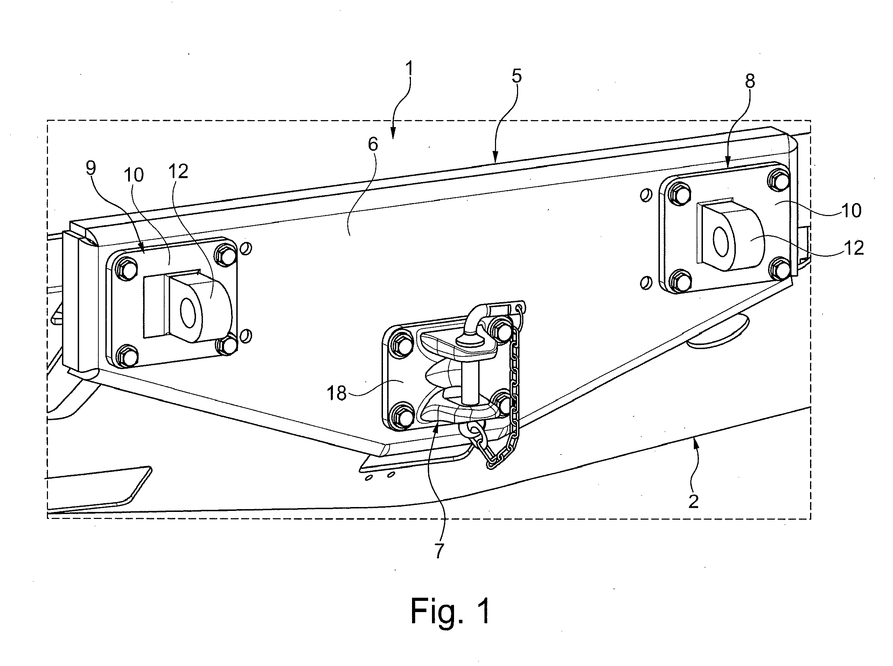

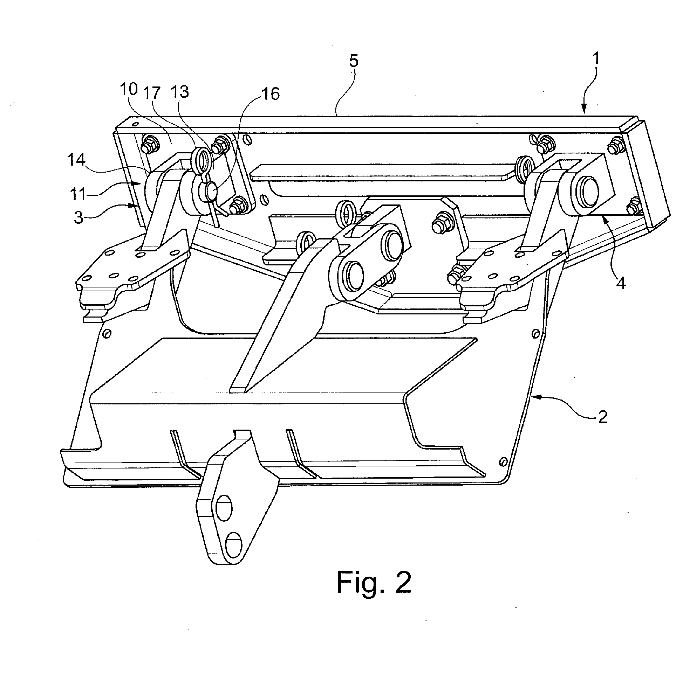

In den Fig. 1 bis 3 ist mit 1 eine erfindungsgemäße Vorrichtung (Abschleppadapter) bezeichnet, die vorzugsweise vorderseitig an einem nicht im Einzelnen dargestellten Fahrzeug 2 befestigt ist. Das Fahrzeug 2 weist in seinem vorderen Bereich beispielsweise zwei erste Abschleppösen 3, 4 auf (Fig. 2). Diese können bereits vorhanden sein oder nachgerüstet werden,

Die Vorrichtung 1 umfasst einen im Wesentlichen plattenförmigen Grundträger 5, auf dessen Außenseite 6, etwas unterhalb der Mitte des Grundträgers 5, eine Abschleppkupplung 7 angeordnet ist. Dabei sind die Randbereiche des Grundträgers 5 zu dessen Versteifung zum Fahrzeug 2 hin umgebogen.

An dem Grundträger 5 sind zwei erste Befestigungseinrichtungen 8, 9 angeordnet, die in Bezug auf die Abschleppkupplung 7 auf gegenüberliegenden Seitenflächen des Grundträgers 5 kraftschlüssig befestigt sind.

Die ersten Befestigungseinrichtungen 8, 9 umfassen jeweils eine mit dem Grundträger 5 außenseitig mittels Schrauben kraftschlüssig verbundene erste Flanschplatte 10. Auf ihrer dem Fahrzeug 2 zugewandten ersten Seite ist die erste Flanschplatte 10 mit einem ersten Befestigungselement 11 verbunden, welches sich über eine in dem Grundträger 5 angeordnete Ausnehmung (Fig. 2) zu dem Fahrzeug 2 hin erstreckt.

Auf ihrer gegenüberliegenden zweiten Seite ist die jeweils erste Flanschplatte 10 mit einer über die Außenseite 6 des Grundträgers 5 ragenden zweiten Abschleppöse 12 kraftschlüssig verbunden.

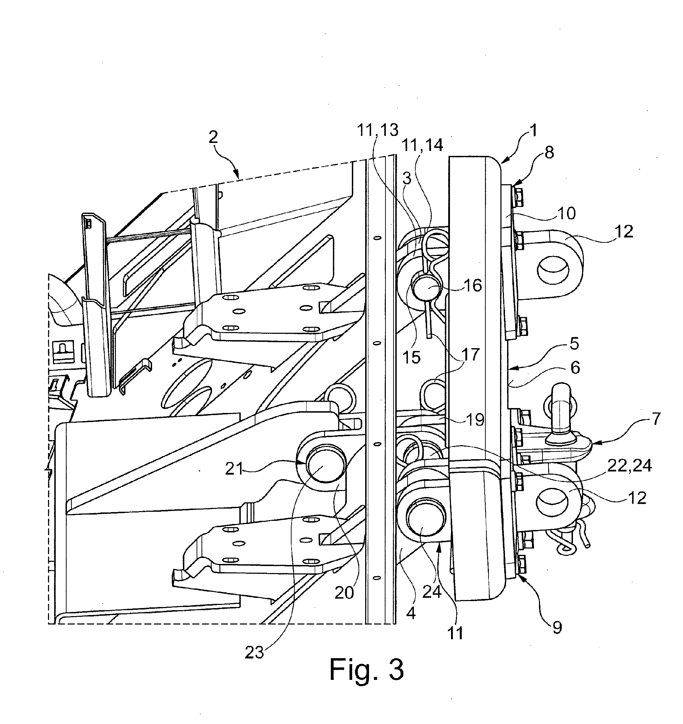

Wie Fig. 2 bzw. 3 entnehmbar ist, sind die ersten Befestigungselemente 11 gabelförmig ausgebildet und umgreifen seitlich die ersten Abschleppösen 3, 4 des Fahrzeuges 2. Außerdem weisen die beiden Schenkel 13, 14 des ersten Befestigungselementes 11 jeweils eine radiale Bohrung 15 auf, durch die ein die Schenkel 13, 14 und die erste Abschleppöse 3, 4 verbindender Steckbolzen 16 hindurchgeführt und mittels eines Sicherungsstiftes 17 gesichert ist.

Die Art der Abschleppkupplung 7 ermöglicht zwei Montagesituationen.

Für die Verwendung einer handelsüblichen Abschleppkupplung 7 ist bevorzugt eine zweite (separate) Flanschplatte 18 vorgesehen. Die Abschleppkupplung 7 umfasst dazu eine mit dem Grundträger 5 kraftschlüssig verbundene zweite Flanschplatte 18, die bevorzugt mittels Schrauben außenseitig bzw. innenseitig an dem Grundträger 5 befestigbar ist. An dieser zweiten Flanschplatte 18 ist ein zweites Befestigungselement 19 kraftschlüssig verbunden (Fig. 3), welches in dieser Ausführung über die Innenseite des Grundträgers 5 ragt und über ein Zwischenstück 20 mit einem Anlenkpunkt 21 der Karosserie des Fahrzeuges 2 lösbar verbunden ist. Dabei erfolgt die Verbindung zwischen dem zweiten Befestigungselement 19 und dem Zwischenstück 20 sowie die Verbindung zwischen dem Zwischenstück 20 und dem Anlenkpunkt 21 bevorzugt mit Hilfe zweier Steckbolzen 22, 23, die jeweils auf ihrer dem Bolzenkopf 24 gegenüberliegenden Seite mittels eines Sicherungsstiftes 17 gesichert sind.

Die zweite Flanschplatte 18 mit der kraftschlüssigen Befestigung (19) können aber auch nur innen an den Grundträger 5 geschraubt werden, sodass das Befestigungselement 19 nicht über die Innenseite hinausragt, d.h., nicht durchgesteckt sein muss.

Für den Fall einer speziell angefertigten Abschleppkupplung kann die Flanschplatte ein Bestandteil der Abschleppkupplung sein, also kein separates Anbauteil, und auch das zweite Befestigungselement ein integrierter Teil der Abschleppkupplung (nicht näher dargestellt), da es sich nicht unbedingt anbieten würde, in diesem Fall extra einen getrennten Montageadapter anzufertigen.

Es versteht sich, dass im Rahmen der erfinderischen Idee an der Grundplatte neben weiteren Bohrungen für das Aufnehmen anderer erster Befestigungseinrichtungen auch weitere erste Befestigungseinrichtungen eingebunden sein können (nicht näher dargestellt).

### Bezugszeichenliste

- 1: Vorrichtung
- 2: Kampfpanzer, Fahrzeug
- 3, 4: erste Abschleppösen
- 5: Grundträger
- 6: Außenseite
- 7: Abschleppkupplung
- 8, 9: erste Befestigungseinrichtungen
- 10: erste Flanschplatte
- 11: erstes Befestigungselement
- 12: zweite Abschleppöse
- 13, 14: Schenkel
- 15: Bohrung
- 16: Steckbolzen
- 17: Sicherungsstift
- 18: zweite Flanschplatte
- 19: zweites Befestigungselement
- 20: Zwischenstück
- 21: Anlenkpunkt
- 22,23: Steckbolzen
- 24: Bolzenkopf

## Patentansprüche

1. Vorrichtung mit einer Abschleppkupplung (7) zur lösbaren Befestigung an einem Fahrzeug (2) mit mindestens zwei ersten Abschleppösen (3, 4), mit den Merkmalen:
a) die Vorrichtung (1) umfasst einen im Wesentlichen plattenförmigen Grundträger (5), auf dessen Außenseite (6) die Abschleppkupplung (7) angeordnet ist,
b) an dem Grundträger (5) sind mindestens zwei erste Befestigungseinrichtungen (8, 9) angeordnet, die in Bezug auf die Abschleppkupplung (7) auf gegenüberliegenden Seitenflächen des Grundträgers (5) kraftschlüssig befestigt sind und die jeweils ein sich über die Innenseite des Grundträgers (5) erstreckendes erstes Befestigungselement (11) umfassen, und
c) die ersten Befestigungselemente (11) sind derart ausgebildet, dass sie direkt oder über Zwischenstücke (20) lösbar mit den ersten Abschleppösen (3, 4) des Fahrzeuges (2) kraft- und/oder formschlüssig verbindbar sind.

2. Vorrichtung nach Anspruch 1, **dadurch gekennzeichnet, dass** mindestens eine der ersten Befestigungseinrichtungen (8, 9) eine mit dem Grundträger (5) kraftschlüssig verbundene erste Flanschplatte (10) umfasst, die auf ihrer ersten Seite mit dem ersten Befestigungselement (11) und auf ihrer gegenüberliegenden zweiten Seite mit einer über die Außenseite (6) des Grundträgers (5) ragenden zweiten Abschleppöse (12) kraftschlüssig verbunden ist.

3. Vorrichtung nach Anspruch 2, **dadurch gekennzeichnet, dass** die erste Flanschplatte (10) der ersten Befestigungseinrichtung (8, 9) außenseitig an dem Grundträger (5) befestigt ist und dass das erste Befestigungselement (11) sich über eine in dem Grundträger (5) angeordnete Ausnehmung zur Innenseite des Grundträgers (5) erstreckt.

4. Vorrichtung nach einem der Ansprüche 1 bis 3, **dadurch gekennzeichnet, dass** die ersten Befestigungselemente (11) gabelförmig ausgebildet sind und bei der bestimmungsgemäßen Verwendung der Vorrichtung (1) die entsprechende erste Abschleppöse (3, 4) des Fahrzeuges (2) seitlich umgreifen, und dass die beiden Schenkel (13, 14) des ersten Befestigungselementes (11) jeweils eine radiale Bohrung (15) aufweisen, durch die ein die Schenkel (13, 14) und die erste Abschleppöse (3, 4) verbindender Steck- oder Schraubbolzen (16) hindurchführbar ist.

5. Vorrichtung nach Anspruch 4, **dadurch gekennzeichnet, dass** bei Verwendung des Steck- oder Schraubbolzens (16) mit Bolzenkopf dieser auf seinem dem Bolzenkopf abgewandten Ende mittels eines Sicherungsstiftes (17) sicherbar ist.

6. Vorrichtung nach einem der Ansprüche 1 bis 5, **dadurch gekennzeichnet, dass** die Abschleppkupplung (7) eine mit dem Grundträger (5) kraftschlüssig verbundene zweite Flanschplatte (18) umfasst, die mit einem zweiten Befestigungselement (19) kraftschlüssig verbunden ist, welche über die Innenseite des Grundträgers (5) ragt und entweder direkt oder über ein Zwischenstück (20) mit mindestens einem Anlenkpunkt (21) der Karosserie des Fahrzeuges (2) lösbar verbindbar ist.
